# EUROPEAN PATENT APPLICATION

(11) **EP 0 716 256 A1**
(43) Date of publication of application: **12.06.1996**
(21) Application number: 95203359.5
(22) Date of filing: 06.12.1995
(51) Int. Cl.: F16L 3/14, F16B 13/08

(54) **Push-in plug**

(30) Priority: 09.12.1994 NL 9402091
(71) Applicant: J.H. DE WIT EN ZONEN B.V., NL-5700 AB Helmond (NL)
(72) Inventor: Thoolen, Wilhelm Franciscus, NL-6077 CG ST. Odilienberg (NL)
(74) Representative: de Bruijn, Leendert C.

(57) **Abstract**

A push-in plug for fixing a cable, piping, panel and the like to a substrate such as a wall, ceiling and the like comprises a bearer (2) as well as a shank (1) intended to be pushed into a drilled hole provided in said substrate, which shank (1) consists of at least two longitudinal sections (3,4,5) which are movable with respect to one another, those faces (14,15,16,17) of said longitudinal sections (3,4,5) which face one another having a corresponding wedge shape such that, when the push-in plug has been pushed into the drilled hole, the longitudinal sections (3,4,5) are moved, under the influence of a force directed outwards, along one another and apart as well as being pressed against the inner wall of the drilled hole. At least one of the longitudinal sections (3,4,5) carries an anchor element (6), the transverse dimension of which is greater than that of the drilled hole, such that said longitudinal section can be firmly retained in the drilled hole by friction.

## Description

The invention relates to a push-in plug for fixing a cable, piping, panel and the like to a substrate such as a wall, ceiling and the like, which push-in plug comprises a bearer as well as a shank intended to be pushed into a drilled hole provided in said substrate, which shank consists of at least two longitudinal sections which are movable with respect to one another, those faces of said longitudinal sections which face one another having a corresponding wedge shape such that, when the push-in plug has been pushed into the drilled hole, the longitudinal sections are moved, under the influence of a force directed outwards, along one another and apart as well as being pressed against the inner wall of the drilled hole.

A push-in plug of this type is disclosed in DE-C 4 312 339. The shank thereof has two longitudinal halves, which can be pressed by hand, with gentle friction, into a drilled hole. When a force directed outwards from the drilled hole is exerted on said push-in plug, a clamping action can be generated in the drilled hole if at least one of the longitudinal halves remains immovable in place so that spreading can take place as a consequence of a relative movement between said longitudinal halves.

In practice, an effect of this type is found to occur only with very well drilled holes which have an accurate hole diameter. As soon as there is any question of any oversize in the hole, the desired effect is not achieved and the push-in plug is pulled out of the hole.

The aim of the invention is, therefore, to provide a push-in plug of the abovementioned type, the retaining effect of which is less sensitive to the dimensions of the drilled hole. Said aim is achieved in that one of the longitudinal sections carries an anchor element, the transverse dimension of which is greater than that of the drilled hole, such that said longitudinal section can be firmly retained in the drilled hole by friction.

Irrespective of the contact between the longitudinal sections and the wall of the drilled hole, which contact initially is still loose, the anchor element already produces a firm retaining effect on the longitudinal section connected thereto. As a result, a relative movement between the longitudinal sections can be assured immediately after insertion of the push-in plug, as soon as a pull is exerted on the bearer, which movement is sufficient to generate the clamping action between said sections in the drilled hole.

In order to facilitate insertion of the push-in plug, the anchor element has a stop face which is located opposite the end of the other longitudinal section which is movable with respect thereto, such that, on insertion of the push-in plug into the drilled hole, said stop face and said end are in contact with one another. The anchor element, which is in frictional interaction with the wall of the drilled hole as soon as it has been inserted in the drilled hole, can, in this embodiment, be pushed into the hole with a certain force necessary to generate a good retaining effect between the wedge-shaped longitudinal sections.

The anchor element can be located at one end of a longitudinal section, whilst the other end of said longitudinal section can be connected by means of a flexible strip of deformable material to the longitudinal section which is not provided with an anchor element. In order to obtain the desired retaining effect, the anchor element can carry protruding, flexible lips which can be brought into frictional interaction with the wall of the drilled hole.

Said lips can have a certain oversize, such that the push-in plug according to the invention can be used in drilled holes of various dimensions. The advantage of this is that a limited number of push-in plugs of various sizes is suitable for the majority of drilled hole diameters which are encountered.

According to a preferred embodiment of the invention, three longitudinal sections are provided, one longitudinal section of which is rigidly connected to the bearer and the other two longitudinal sections of which are connected to the anchor element. If the longitudinal section rigidly connected to the bearer is centrally positioned between the other two longitudinal sections, a reliable, symmetrical clamping effect is obtained; in this context, the central longitudinal section has a wedge shape which is symmetrical with respect to its mid plane and the other two longitudinal sections each have a corresponding wedge shape.

The push-in plug according to the invention is, in particular, suitable for production in one piece from plastic.

The push-in plug according to the invention can have various bearers. A push-in plug in which the bearer is composed of two bearer halves which can be accommodated in the drilled hole, as well as of a strip of flexible material, the two ends of which are each connected to one of the bearer halves, one of which bearer halves is connected to a longitudinal section and the other is free, which bearer halves have transverse protrusions which fit into one another, may be mentioned as an example.

A push-in plug of this type is, in particular, suitable for use with cables, piping and the like.

In the case of a push-in plug intended for fixing panels, the bearer can have a round head.

Furthermore, the push-in plug can have a normal cable or pipe clamp.

The invention is explained in more detail below with the aid of a few illustrative embodiments shown in the figures.

Figure 1 shows a perspective view of a first embodiment of the push-in plug according to the invention.

Figure 2 shows a top view of the push-in plug shown in Figure 1.

Figure 3 shows the push-in plug according to Figures 1 and 2 in the fitted state.

Figure 4 shows a second embodiment of the push-in plug.

Figure 5 shows a third embodiment of the push-in plug.

Figure 6 shows a fourth embodiment of the push-in plug.

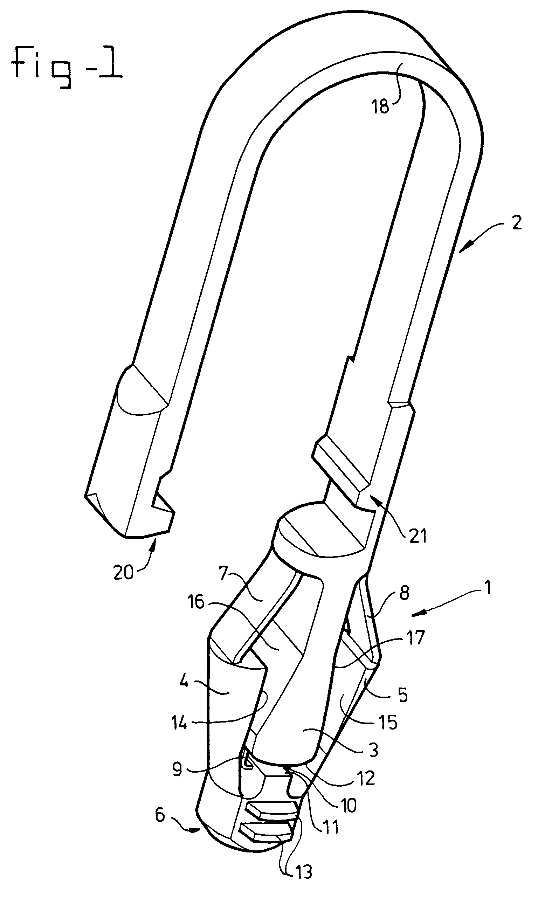

The push-in plug shown in Figure 1 comprises a shank which is indicated in its entirety by 1 and which has to be placed in a pre-drilled hole, as well as a bearer 2 fixed to the shank. The shank 1 comprises a central longitudinal section 3, which is rigidly fixed to the bearer 2, outer longitudinal sections 4, 5, which are partially located alongside said central longitudinal section 3, and an anchor element 6. The outer longitudinal sections 4, 5 are fixed to the bearer 2 by means of flexible strips 7, 8; at the other end they are fixed to the anchor element 6. The arrangement is such that, in the unstressed state, the outer longitudinal sections deflect slightly outwards from said anchor element 6.

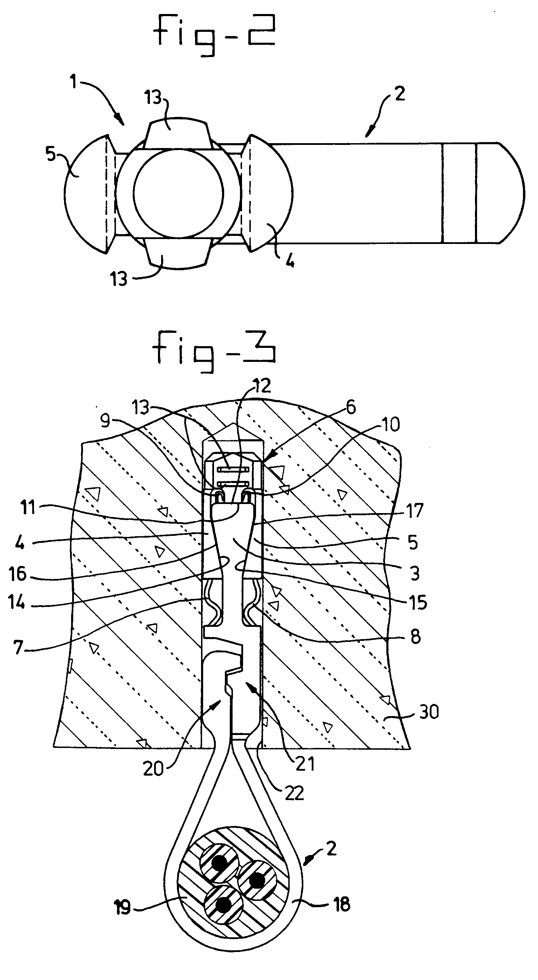

The central longitudinal section 3 is fixed by means of flexible strips of material 9, 10 to anchor element 6. At this location the anchor element also has a stop face 11, which, in the free state, is some distance away from the end face 12 of the central longitudinal section 3. Finally, the anchor element has lips 13, which point radially outwards and which have a certain oversize. Various aspects can be seen in Figure 2.

The entire push-in plug can be injection-moulded in one piece from plastic, the dimensions of the strips of material 7, 8 and 9, 10 being so chosen that they deform easily, as can also be seen in Figure 3.

Figure 3 shows the push-in plug according to Figures 1 and 2 as it appears in a pre-drilled hole 22 in a substrate 30. On insertion, the anchor element 6 enters the hole first; the lips 13 provide a certain degree of friction during this operation. As a consequence of said friction, the anchor element 6 is initially held back; however, as soon as the end face 12 of the central longitudinal section 3 comes into contact with the stop face 11 of the anchor element 6 the latter is pushed further into the hole 22. During this operation, the flexible strips of material 9, 10 are deformed as shown in Figure 3.

The outer longitudinal sections 4 and 5, which initially point slightly outwards, are then pressed inwards and their wedge-shaped surfaces 14, 15 come to rest against the opposing corresponding wedge-shaped surfaces 16, 17 of the central longitudinal section 3. During this operation, the flexible strips of material 7 and 8 deform as shown in said Figure 3.

Before the shank is pushed completely into the hole 22, the bearer 2, which consists of a strip 18, is wrapped around a cable 19. The ridge section 20 located at the free end of the strip 18 is then brought into interaction with the corresponding ridge section 21 which is located at the junction between bearer 2 and shank 1. The push-in plug is then pushed fully into the hole 22, the ridge sections 20, 21 being retained, pressed into one another, in the hole 22.

As soon as a force directed away from the substrate 30 is exerted on the bearer 2, for example the force of the weight of the cable 19, the central longitudinal section 3 tries to move outwards. This causes the two wedge surfaces 16, 17 to slide over the corresponding wedge surfaces 14, 15 of the outer longitudinal sections 4, 5, which are held in place because they are rigidly connected to the anchor element 6. Said anchor element 6, in its turn, is unable to move because of the frictional interaction of its lips 13 with the inner wall of the hole 22. As the tensile force increases, the wedge effect also becomes greater, as a result of which the clamping action in the hole increases, with the result that the push-in plug remains in place.

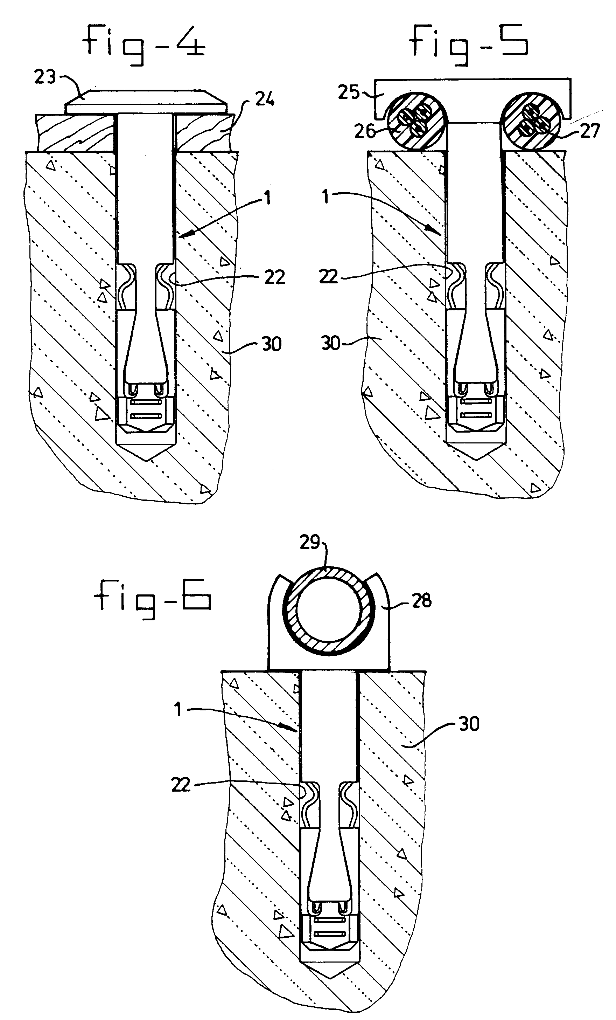

In the case of the illustrative embodiment shown in Figure 4, the shank 1 carries a bearer which is constructed as a round head 23. By means of a round head of this type, a panel 24, for example, can be held firmly on the substrate 30, in which the hole 22 for the shank 1 of the push-in plug has been made.

The illustrative embodiment shown in Figure 5 shows a push-in plug which has a saddle head 25, by means of which two cables 26, 27 can be held firmly on the substrate 30.

Figure 6 shows a push-in plug having a cable clamp or pipe clamp 28, in which the pipe 29 is clamped.

## Claims

1. Push-in plug for fixing a cable, piping, panel and the like to a substrate (30) such as a wall, ceiling and the like, which push-in plug comprises a bearer (2) as well as a shank (1) intended to be pushed into a drilled hole (22) provided in said substrate (30), which shank (1) consists of at least two longitudinal sections (3, 4, 5) which are movable with respect to one another, those faces (14, 15, 16, 17) of said longitudinal sections which face one another having a corresponding wedge shape such that, when the push-in plug has been pushed into the drilled hole (22), the longitudinal sections (3, 4, 5) are moved, under the influence of a force directed outwards, along one another and apart as well as being pressed against the inner wall of the drilled hole (22), characterised in that one of the longitudinal sections (4, 5) carries an anchor element (6), the transverse dimension of which is greater than that of the drilled hole (22), such that said longitudinal element (4, 5) can be firmly retained in the drilled hole (22) by friction.

2. Push-in plug according to Claim 1, wherein the anchor element (6) has a stop face (11) which is located opposite the end (12) of the other longitudinal section (3) which is movable with respect thereto, such that, on insertion of the push-in plug into the drilled hole (22), said stop face (11) and said end (12) are in contact with one another.

3. Push-in plug according to Claim 1 or 2, wherein the anchor element (6) is located at one end of a longitudinal section (3), and the other end of said longitudinal section (3) is connected by means of a flexible strip of deformable material (7, 8) to the longitudinal section (4, 5) which is not provided with an anchor element.

4. Push-in plug according to Claim 1, 2 or 3, wherein the anchor element (6) carries protruding, flexible lips (13) which can be brought into frictional interaction with the wall of the drilled hole.

5. Push-in plug according to Claim 1, 2, 3 or 4, wherein three longitudinal sections are provided, one longitudinal section (3) of which is rigidly connected to the bearer (2) and the other two longitudinal sections (4, 5) of which are connected to the anchor element (6).

6. Push-in plug according to Claim 5, wherein the longitudinal section (3) rigidly connected to the bearer (2) is centrally positioned between the other two longitudinal sections (4, 5).

7. Push-in plug according to Claim 6, wherein the central longitudinal section (3) has a wedge shape (14, 15) which is symmetrical with respect to its mid plane and the other two longitudinal sections (4, 5) each have a corresponding wedge shape (16, 17).

8. Push-in plug according to Claim 5, 6 or 7, wherein the longitudinal section (3) rigidly connected to the bearer (2) is connected by means of strips of flexible material (9, 10) to the anchor element (6).

9. Push-in plug according to one of the preceding claims, consisting of one piece made of plastic.

10. Push-in plug according to one of the preceding claims, wherein the bearer (2) is composed of two bearer halves (20, 21) which can be accommodated in the drilled hole (22), as well as of a strip of flexible material (18), the two ends of which are each connected to one of the bearer halves (20, 21), one (21) of which bearer halves is connected to a longitudinal section (3) and the other (20) is free, which bearer halves (20, 21) have transverse protrusions which fit into one another.

11. Push-in plug according to one of Claims 1-9, wherein the bearer has a round head (23).

12. Push-in plug according to one of Claims 1-9, wherein the bearer has a cable clamp (25) or pipe clamp (29).
